# EUROPÄISCHE PATENTSCHRIFT

(11) **EP 3 383 980 B1**
(45) Veröffentlichungstag und Bekanntmachung des Hinweises auf die Patenterteilung: **06.01.2021**
(21) Anmeldenummer: 16822366.7
(22) Anmeldetag: 30.11.2016
(51) Int. Cl.: C10L 3/08

(54) **VERFAHREN UND ANLAGE ZUR KATALYTISCHEN METHANISIERUNG VON EDUKTGASEN**
PROCESS AND APPARATUS FOR CATALYTIC METHANISATION OF GASES
PROCÉDÉ ET APPAREIL POUR LA MÉTHANISATION DES GAZ

(30) Priorität: 01.12.2015 AT 510292015
(43) Veröffentlichungstag der Anmeldung: 10.10.2018
(73) Patentinhaber: Christof International Management GmbH, 1030 Wien (AT)
(72) Erfinder: FRIEDACHER, Alfred, 8101 Gratkorn (AT); BIEGGER, Philipp, 8700 Leoben (AT)
(74) Vertreter: Babeluk, Michael
(86) Internationale Anmeldenummer: PCT/AT2016/060114
(87) Internationale Veröffentlichungsnummer: WO 2017/091841

(56) Entgegenhaltungen:
- WO-A1-2014/154250
- US-A1- 2012 063 963
- STERNER MICHAEL ET AL: "Erneuerbares Methan", SOLARZEITALTER,, Bd. 1, 1. Januar 2010 (2010-01-01), Seiten 51-58, XP002676162,
- BROOKS ET AL: "Methanation of carbon dioxide by hydrogen reduction using the Sabatier process in microchannel reactors", CHEMICAL ENGINEERING SCIENCE, OXFORD, GB, Bd. 62, Nr. 4, 4. Januar 2007 (2007-01-04) , Seiten 1161-1170, XP005822354, ISSN: 0009-2509, DOI: 10.1016/J.CES.2006.11.020

## Beschreibung

Die Erfindung betrifft ein Verfahren zur katalytischen Methanisierung von Eduktgasen, nämlich Kohlenstoffdioxid und/oder Kohlenstoffmonoxid mit Wasserstoff in einem Reaktor, mit einem ersten Schritt, in dem Wasserstoffgas aus Wasser elektrolytisch hergestellt wird, wobei in einem zweiten Schritt die katalytischen Methanisierung von Kohlendioxid und/oder Kohlenmonoxid mit dem gewonnenen Wasserstoff erfolgt sowie eine Anlage hierzu, wobei die für die Elektrolyse benötigte elektrische Energie aus einer erneuerbaren Energiequelle, beispielsweise Windenergie bezogen wird.

Erneuerbarer Strom, insbesondere aus Wind- und Fotovoltaikanlagen fällt sowohl zeitlich als auch räumlich stark schwankend an. Somit ist es notwendig, einen Ausgleich zwischen Angebot und Nachfrage im Zuge des Ausbaus der erneuerbaren Energieerzeugung zu schaffen. Hierbei müssen gegebenenfalls große Energiemengen auch über mehrere Tage oder Wochen gespeichert werden. Eine hierfür geeignete Form der Energiespeicherung ist die sogenannte "Power-to-Gas"-Technologie, bei der mittels Wasserelektrolyse Wasserstoff hergestellt wird, wobei die hierfür notwendige elektrische Energie aus einer erneuerbaren Energiequelle stammt. Der so hergestellte Wasserstoff wird in einer heterogenen gaskatalytischen Reaktion mit insbesondere Kohlenstoffdioxid zu Methan umgesetzt, wobei das Methan, gegebenenfalls nach entsprechender Aufbereitung, anschließend in die bestehende Erdgasinfrastruktur eingespeist wird. Auf diese Weise wird die primäre elektrische Energie außerhalb des Stromnetzes in Form von Erdgas gespeichert. Dieses Erdgas kann dann bei Bedarf wieder in elektrische Energie umgewandelt oder aber in Form von Wärme durch Verbrennung oder als Kraftstoff beispielsweise zum Antrieb von Fahrzeugen eingesetzt werden.

Ein derartiges "Power-to-Gas"-Verfahren kann der DE 10 2013 102 669 A1 entnommen werden. Hierin wird die Herstellung von vorwiegend flüssigen Kohlenwasserstoffen aus Kohlenstoffdioxid, Wasser und regenerativer Elektroenergie beschrieben. In der Publikation STERNER Michael et al.: "Erneuerbares Methan", SO-LARZEITALTER, Bd. 1, 1. Januar 2010 (2010-01-01), Seiten 51-58, XP002676162 ist ebenfalls die Speicherung von Strom aus erneuerbaren Quellen durch die Kopplung von Strom- und Gasnetz beschrieben.

Die Methanisierung von Kohlendioxid mit Wasserstoff wird üblicherweise bei der Vergasung von Kohle oder Biomasse bereits seit Jahren kommerziell eingesetzt. Ein weiterer Anwendungsbereich ist die Reinigung von Gasmischungen in Produktionsanlagen der chemischen Industrie, zum Beispiel bei der Entfernung geringer Mengen von Kohlenstoffmonoxid und/oder Kohlenstoffdioxid aus dem Synthesegas von Ammoniakanlagen. Diese Prozesse werden üblicherweise in Festbett- oder Wirbelschichtreaktoren durchgeführt, wobei diese zumeist kontinuierlich betrieben werden, sodass keine oder nur sehr geringe Lastwechsel vorliegen. Ein derartiges Verfahren sowie eine Anlage hierzu ist in der WO 2014/154250 A1 offenbart.

Da die Methanisierung eine stark exotherme Reaktion ist, müssen die eingesetzten Katalysatoren, üblicherweise pelletförmige Schüttkatalysatoren im Fall von Festbettreaktoren, vor zu starkem Temperaturanstieg in der Schüttung geschützt werden. Dies wird üblicherweise durch Produktgasrückführung und Zwischenkühlung realisiert.

Die US 2012/0063963 A1 beschreibt die Herstellung eines Methanisierungskatalysators, wobei wabenartige Trägerstrukturen für den Katalysator vorgesehen sind. Diese Trägerstruktur kann entweder ein keramisches Oxid oder auch ein Metall sein. Ein ähnlicher Katalysator ist auch in der EP 2 893 977 A1 beschrieben.

Bei Power-to-Gas-Verfahren fällt die Menge des mittels Elektrolyse hergestellten Reaktionsgases, nämlich Wasserstoffgas, in Abhängigkeit zum verfügbaren elektrischen Strom, nämlich zeitlich begrenztem Stromüberschuss, an. Da dies naturgemäß sehr stark schwanken kann, sind die konventionellen Verfahren zur Methanisierung nicht oder nur schlecht geeignet, weil nur über sehr groß dimensionierte Wasserstoffzwischenspeicher derartige Lastschwankungen ausgeglichen werden können.

Es ist daher Aufgabe der Erfindung, ein Verfahren zur Verfügung zu stellen, die die Nachteile des Stand der Technik beseitigen und insbesondere eine kontinuierliche Methanisierung von Kohlenstoffdioxid und/oder Kohlenstoffmonoxid mit Wasserstoff weitgehend unabhängig von Lastschwankungen der zur Elektrolyse von Wasser verwendeten elektrischen Energie ermöglichen. Die Erfindung ist in den angefügten Ansprüchen definiert.

Diese Aufgabe wird erfindungsgemäß durch ein Verfahren zur katalytischen Methanisierung von Eduktgasen, nämlich Kohlenstoffdioxid und/oder Kohlenstoffmonoxid mit Wasserstoff in einem Reaktor gelöst, wobei in einem ersten Schritt Wasserstoffgas aus Wasser elektrolytisch hergestellt wird, und der für die Elektrolyse benötigte elektrische Strom aus einer erneuerbaren Energiequelle, beispielsweise Windenergie bezogen wird. Die katalytische Methanisierung selbst erfolgt in einem anschließenden zweiten Schritt, wobei erfindungsgemäß vorgesehen ist, dass der zur Methanisierung eingesetzte Katalysator auf einer bevorzugterweise als Wabenstruktur ausgebildeten Trägerstruktur mit einer Wärmespeicherkapazität größer 700 J/(kgK) angeordnet ist, die als Speichermasse für die während der Methanisierung entstehende Reaktionswärme eingesetzt wird.

Da die Methanisierung eine exotherme Reaktion darstellt, wird die hierbei anfallende Wärme in der Trägerstruktur des Katalysators gespeichert. Dadurch wird auch über längere Zeiträume der Reaktorraum durch den in dem Reaktor angeordneten Katalysator auf Reaktionstemperatur gehalten, auch wenn in dem Reaktor aufgrund von Lastschwankungen und daraus resultierend mangelndem Wasserstoff die Methanisierung unterbrochen wird.

Während der Methanisierung sorgt zumindest eine Wärmetauschereinrichtung für die Abfuhr von überschüssiger Reaktionswärme, die bei Bedarf zur Temperierung von weiteren Reaktionskammern eingesetzt werden kann.

Besonders bevorzugt ist hierbei vorgesehen, dass der Reaktor zumindest zwei Kammern aufweist, die seriell, parallel oder wechselseitig mit Eduktgas beschickt werden. Die Kammern beinhalten hierbei vorzugsweise wenigstens zwei umschaltbare Kompartimente, in welchen die Katalysatoren angeordnet sind. Wie bereits zuvor beschrieben hat dies den Vorteil, dass bei Teillastbetrieb nur zumindest eine Kammer und/oder Kompartiment mit Reaktionsgas, nämlich Wasserstoff und Kohlenstoffdioxid und/oder Kohlenstoffmonoxid zur Durchführung der Methanisierungsreaktion beschickt wird, während zumindest eine zweite Kammer im Standby-Betrieb gehalten wird, wobei die in der Trägerstruktur gespeicherte Reaktionswärme diese zweite Kammer und/oder Kompartiment auf Reaktionstemperatur hält.

Im Rahmen dieser Offenbarung werden die Begriffe "Reaktorkammer", "Kammer" und "Reaktorraum" synonym verwendet. Gleiches gilt für die Begriffe "Kompartiment" und "Abteil".

Zur Durchführung des erfindungsmäßen Verfahren wird besonders bevorzugt eine Anlage mit zumindest einem Reaktor, in dem der Katalysator angeordnet ist, verwendet, wobei der zumindest eine Reaktor über zumindest eine Gaszuleitung und zumindest eine Wärmetauschereinrichtung verfügt, wobei der zur Methanisierung eingesetzte Katalysator eine Trägerstruktur mit einer hohen Wärmespeicherkapazität größer 700 J/(kgK) aufweist, die Trägerstruktur als Speichermasse für die während der Methanisierung entstehende Reaktionswärme einsetzbar ist, und die in der Trägerstruktur gespeicherte Reaktionswärme bei Bedarf über zumindest eine Wärmetauschereinrichtung abführbar ist.

In einer besonders bevorzugten Ausführung der Erfindung weist die Trägerstruktur des Katalysators eine Wabenstruktur mit wabenförmigen Grundkörpern auf, wobei vorteilhafterweise die wabenförmigen Grundkörper einen rechteckigen, quadratischen, gleichmäßigen dreieckigen oder gleichmäßigen sechseckigen Querschnitt aufweisen. Diese Querschnitte erlauben den Aufbau von Katalysatorschichten innerhalb eines Reaktorraums, wobei bevorzugterweise die Waben entlang ihrer Seitenkanten zueinander angeordnet sind. Hierbei haben sich für den Aufbau von Katalysatorschichten insbesondere Waben mit einer Seitenlänge von 0,05 m bis 0,3 m und einer Wabenhöhe von 0,1 m bis 0,6 m bewährt.

Die Trägerstruktur des Katalysators ist vorteilhafterweise aus einem Material hergestellt, dass aus einer Gruppe gewählt ist, die Keramikoxide, wie beispielsweise Siliziumoxid, Titanoxid, Aluminiumoxid, Ceroxid, Zirkoniumoxid oder Mischungen daraus enthält. Aufgrund der während der Methanisierung freiwerdenden Reaktionswärme und den damit entstehenden hohen Temperaturen haben sich insbesondere Trägerstrukturen bewährt, die aus bei 1300°C bis 1600°C gebrannten Cordierit-, Mullit- oder Aluminiumoxidmassen hergestellt sind. Diese Materialien halten insbesondere den bei der Methanisierung anfallenden hohen Temperaturbeanspruchungen und Temperaturwechsel stand.

Hierbei ist erfindungsgemäß vorgesehen, dass zumindest teilweise auf der Oberfläche der Trägerstruktur ein katalytisch aktives Material, bevorzugterweise als Wash-Coat, aufgebracht ist, wobei der Katalysator zumindest ein Element der Gruppe-VIII-Elemente enthält, das insbesondere aus der Nickelgruppe, der Kobaltgruppe und/oder der Eisengruppe gewählt ist.

Für die Herstellung des Wash-Coat wird üblicherweise eine saure Metalloxidsuspension, beispielsweise Aluminiumoxid oder Zirkoniumoxid auf die Trägerstruktur aufgebracht, und die derart beschichtete Trägerstruktur anschließend getrocknet und gebrannt. Schließlich wird diese Schicht mit einer Salzlösung des gewählten Katalysators imprägniert, und der Katalysator durch weiteres Trocknen und gegebenenfalls Brennen auf der Trägerstruktur fixiert.

In einer besonders bevorzugten Ausführung der Erfindung ist ein Reaktorsystem mit zumindest zwei Reaktorkammern vorgesehen, in denen der Katalysator, insbesondere keramische Wabenkatalysatoren, angeordnet sind, wobei vorteilhafterweise jede Reaktorkammer über zumindest eine Gasleitung und vorzugsweise zumindest eine Wärmetauschereinrichtung verfügt. Dadurch wird das Teillastverhalten des Reaktorsystems, das besonders bevorzugt als Hordenreaktorsystem ausgebildet ist, erheblich verbessert.

In einer weiteren bevorzugten Ausführung ist zusätzlich jede Kammer in zumindest zwei Kompartimente oder Abteile unterteilt, wobei jedes Kompartiment unabhängig mit Eduktgas anströmbar ist. Dies hat eine zusätzliche höhere Lastflexibilität zur Folge.

Im Falle niedriger Eduktgasströme, insbesondere in Hinblick auf den mittels Elektrolyse hergestellten Wasserstoff, kann beispielsweise nur ein erstes Kompartiment einer ersten Kammer angeströmt werden, während die weiteren Kompartimente im Ruhezustand verbleiben. Durch die große keramische Masse der Trägerstruktur, insbesondere bei Wabenkatalysatoren, wird die während der Reaktion entstehende Wärme gespeichert, wobei das oder die Kompartimente im Ruhezustand durch die von der Trägerstruktur abgegebene Wärme auf Reaktionstemperatur verbleiben. Die Zufuhr an Eduktgas kann wechselweise zwischen den einzelnen Kompartimenten oder Abteilen des Hordenreaktors derart gesteuert werden, dass in allen Kompartimenten abwechselnd exotherme Reaktionswärme freigesetzt und gespeichert wird, und so die Kompartimente jeweils auf Reaktionstemperatur gehalten werden. Bei kontinuierlichem Betrieb erlauben die Wärmetauschereinrichtungen in den jeweiligen Reaktionskammern eine Abfuhr von überschüssiger Wärme, um eine Überhitzung des Katalysators und/oder des Reaktorraums zu vermeiden.

Die erfindungsgemäße Anlage kann in ihrer Größe an die jeweiligen Durchsätze angepasst werden, insbesondere bei Hordenreaktoren ist eine Erweiterung der Anlage bei Verwendung von Wabenkatalysatoren auf einfache Weise möglich. Hierbei muss lediglich die Anzahl der eingesetzten Waben an den maximal zu erwartenden Eduktgasstrom angepasst werden.

In einer alternativen Ausführung der Erfindung ist ein Reaktorsystem mit zumindest zwei Festbettreaktoren vorgesehen, in denen der Katalysator angeordnet ist, wobei vorteilhafterweise jeder Reaktor über zumindest eine Gaszuleitung und vorzugsweise zumindest eine Wärmetauschereinrichtung verfügt.

Besonders bevorzugt ist vorgesehen, dass die Trägerstruktur des Katalysators innerhalb der jeweiligen Rektoren oder Reaktionskammern in Schichten angeordnet ist, wobei die Schichtstruktur bevorzugterweise 4 bis 30 Kanäle pro Quadratzentimeter, also eine Zelldichte von 25 cpsi bis 200 cpsi aufweist. Diese Kanäle erlauben das Durchströmen der jeweiligen Schichten mit Reaktionsgasen ohne signifikanten Druckabfall und stellen gleichzeitig eine ausreichend hohe Kontaktfläche der Gase mit den aktiven Zentren des Katalysators bereit.

Die Speicherfähigkeit in der jeweiligen Reaktionskammer kann dadurch verbessert werden, dass die Schichtstruktur zumindest eine katalytisch aktive Schicht oder Bereich und zusätzlich zumindest eine katalytisch inaktive Schicht oder Bereich aufweist, wobei die inaktive Schicht bevorzugterweise aus der Trägerstruktur für den Katalysator gebildet ist. Hierbei weisen besonders bevorzugt die jeweiligen Schichten die bereits beschriebene Wabenstruktur auf, wobei die wabenförmigen Grundkörper der katalytisch inaktiven Schicht keine katalytisch wirksamen Bestandteile und/oder Beschichtung aufweisen und ausschließlich der Wärmespeicherung dienen. Ebenso kann vorgesehen sein, dass katalytisch aktive und katalytisch inaktive Wabenkörper innerhalb einer Schicht in beliebigem Verhältnis gemischt werden.

Im Folgenden wird anhand von nichteinschränkenden Ausführungsbeispielen mit zugehörigen Figuren die Erfindung näher erläutert. Darin zeigen:
- Figur 1: eine schematische Ansicht einer ersten Ausführung der erfindungsgemäßen Vorrichtung;
- Figur 2: einen schematischen Querschnitt auf eine Reaktionskammer der Vorrichtung aus Figur 1;
- Figur 3: eine schematische Ansicht einer zweiten Ausführung der erfindungsgemäßen Vorrichtung; und
- Figur 4: eine schematische Ansicht einer dritten Ausführung der erfindungsgemäßen Vorrichtung.

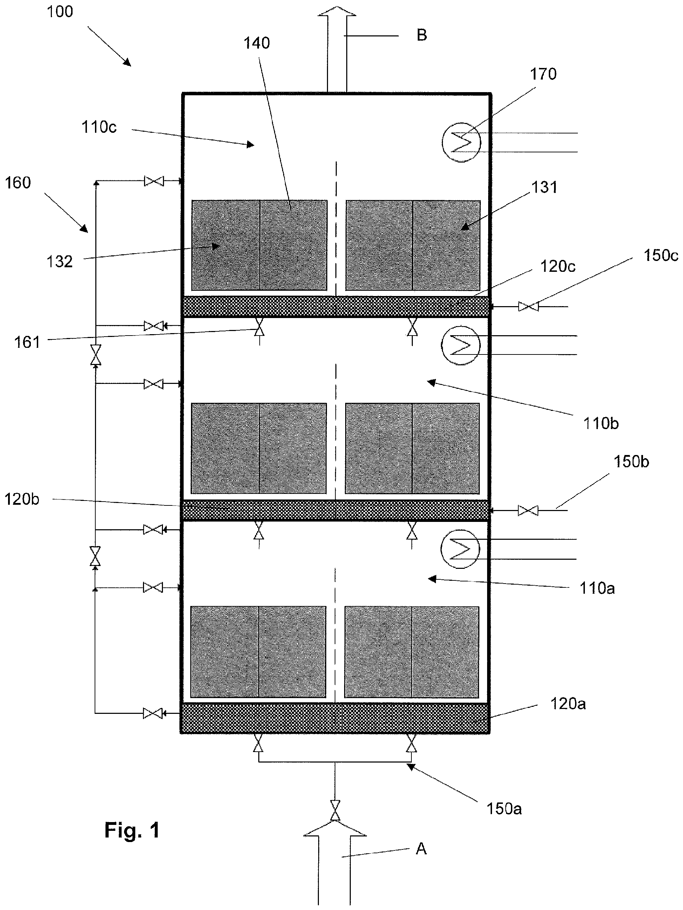

Figur 1 zeigt in einer schematischen Darstellung einen erfindungsgemäßen Reaktor 100, der in dieser Ausführung der Erfindung als Hordenreaktor ausgebildet ist. Dieser Hordenreaktor 100 weist drei Reaktorkammern 110a, 110b, 110c auf, die jeweils über eine Gasverteilungsschicht 120a, 120b, 120c, üblicherweise aus porösem Material, verfügen, die der gleichmäßigen Verteilung des Gases innerhalb der Reaktorkammern 110a, 110b, 110c dient.

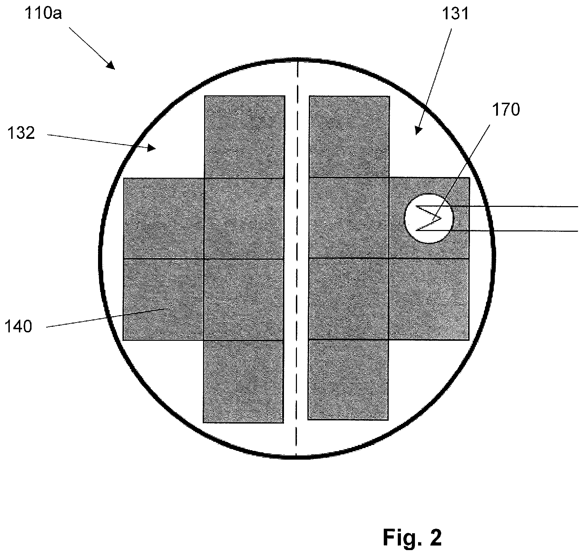

In jeder Reaktorkammer 110a, 110b, 110c ist in dieser Ausführung der Erfindung Katalysatormaterial 140 in Form von Wabenkatalysatoren in zwei Kompartimenten 131, 132 (Figur 2) angeordnet.

Die Zuleitung von Eduktgasen (Pfeil A) erfolgt über ein Gasverteilungssystem 150a, 150b, 150c, das zyklisch schaltbar ist, sodass die jeweiligen Kompartimente 131, 132 unabhängig voneinander angeströmt werden können. Diese zyklische Schaltung erlaubt eine zeitlich versetzte Abfolge von Methanisierungsreaktionen in den einzelnen Kompartimenten 131, 132 beziehungsweise in den darin befindlichen Katalysatorschichten. Hierbei ist die zeitliche Abfolge derart gewählt, dass in den einzelnen Kompartimenten 131, 132 wiederkehrend exotherme Reaktionswärme freigesetzt wird, um so die Kompartimente 131, 132 und in der Folge die Reaktorkammern 110a, 110b, 110c auf Betriebstemperatur zu halten. Die Reaktionswärme wird hierbei in den wabenförmigen Grundkörpern der Trägerstruktur des Katalysators 140 gespeichert.

Ein Bypasssystem 160 erlaubt eine zyklische Schaltung des Eduktgases in den einzelnen Reaktorkammern 110a, 110b, 110c, wobei hierfür vorgesehene Absperrventile 161 in dem Gasverteilungssystem 150a, 150b, 150c die Gaszuführung in den Gasverteilungsschichten 120a, 120b, 120c gegebenenfalls unterbinden. Sollten die Eduktgasströme in nicht ausreichender Menge für einen Betrieb aller Reaktorkammern 110a, 110b, 110c beziehungsweise Kompartimente 131, 132 zur Verfügung stehen, erlaubt diese zyklische Schaltung eine zeitlich versetzte Abfolge von Methanisierungsreaktionen in den einzelnen Reaktorkammern 110a, 110b, 110c beziehungsweise Kompartimente 131, 132.

Des Weiteren ist jede Reaktorkammer 110a, 110b, 110c mit Wärmetauschereinrichtungen 170 ausgestattet, die eine Abfuhr von überschüssiger Wärme und/oder Temperierung der jeweiligen Reaktorkammer 110a, 110b, 110c erlauben.

Die Entnahme des Produktgases, nämlich des Rohmethans, erfolgt bevorzugterweise am Kopf des Hordenreaktors 100 (Pfeil B).

In der Figur 2 ist beispielhaft die Reaktorkammer 110a in einer Draufsicht dargestellt, wobei in den beiden Kompartimenten 131, 132 jeweils Katalysatormaterial 140 angeordnet ist. Die Katalysatorschicht 140 besteht aus einer Vielzahl von wabenförmigen Grundkörpern, die ein katalytisch wirkendes Salz aufweisen, beispielsweise in Form eines Wash-Coats, wobei die Grundkörper entlang ihrer Seitenkanten zueinander angeordnet sind.

Die wabenförmigen Grundkörper dieses Katalysatormaterials 140 weisen parallel zur Längsachse des Hordenreaktors 100 verlaufende Kanäle (nicht dargestellt) auf, die ein Durchströmen des Katalysatormaterials 140 in den Kompartimenten 131, 132 erlauben.

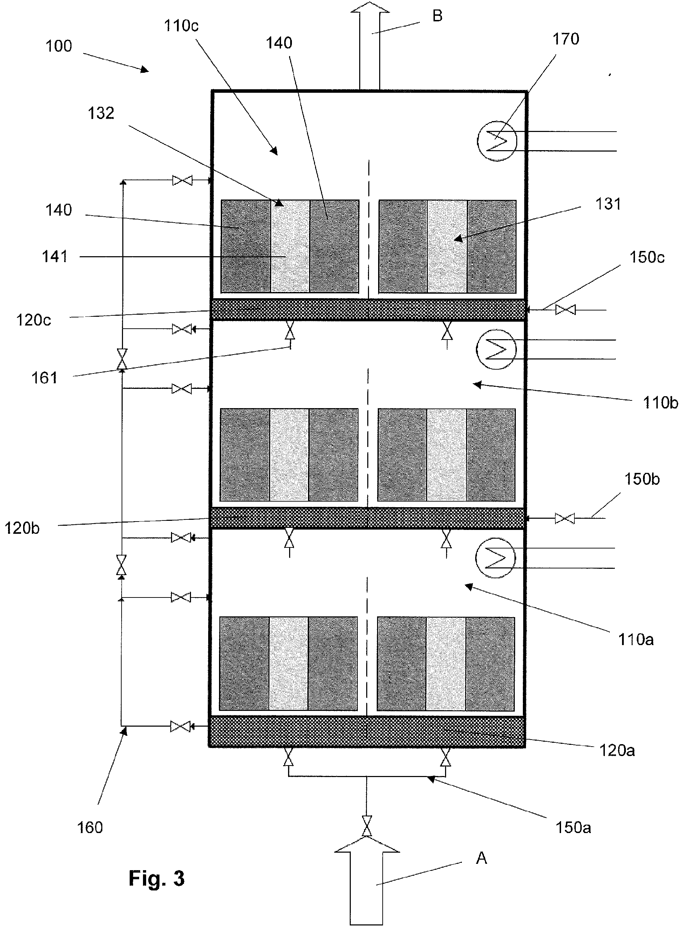

In der Figur 3 ist eine weitere Ausführung der Erfindung dargestellt, wobei der darin gezeigte Hordenreaktor 100 im Wesentlichen den gleichen Aufbau wie in Figur 1 gezeigt aufweist. In dieser Variante sind die Kompartimente 131, 132 mit Katalysatormaterial 140 befüllt, wobei das Katalysatormaterial 140 von Wärmespeicherschichten 141 durchsetzt ist. Diese Wärmespeicherschichten 141 sind katalytisch inaktiv, und sind besonders bevorzugt aus den wabenförmigen Grundkörpern der Trägerstruktur der katalytisch aktiven Schicht 140 gebildet, weisen jedoch im Gegensatz zu dieser keine katalytisch wirksame Ausrüstung auf. Die Anordnung dieser Wärmespeicherschichten 141 kann die Katalysatorschicht 140 umgeben oder sie durchsetzen.

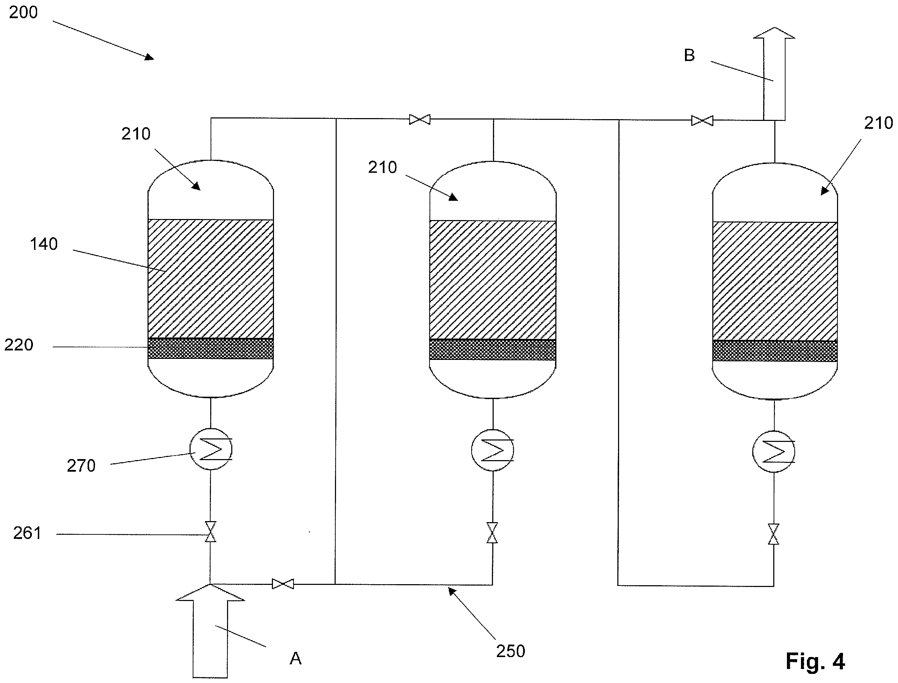

Eine dritte Ausführung der erfindungsgemäßen Vorrichtung 200 kann der Figur 4 entnommen werden. Hierin sind drei Festbettreaktoren 210 vorgesehen, die wiederum mit Katalysatormaterial 140 befüllt sind, das erfindungsgemäß aus wabenförmigen Grundkörpern besteht. Es ist wiederum eine Gasverteilungsschicht 220 vorgesehen, die eine gleichmäßige Verteilung des über ein Gasverteilungssystem 250 einströmenden Gases (Pfeil A) innerhalb der Reaktorkammer bewirkt. Das einströmende Gas kann bei Bedarf mithilfe einer Wärmetauschereinrichtung 270 temperiert werden.

Des Weiteren sind in dem Gasverteilungssystem 250 Absperrventile 261 vorgesehen, die eine zyklische und/oder alternierende Zufuhr an Eduktgasen zu den jeweiligen Festbettreaktoren 210 erlauben.

Es versteht sich, dass die vorliegende Erfindung nicht auf die oben dargestellte Ausführungsvarianten beschränkt ist. Insbesondere können unterschiedliche Festbettreaktortypen zum Einsatz kommen, die für die Aufnahme der oben beschriebenen Katalysatorschichten geeignet sind. Erfindungswesentlich ist, dass diese Katalysatorschichten eine hohe Wärmespeicherkapazität aufweisen und/oder weitere katalytisch inaktive Schichten mit hoher Wärmespeicherkapazität vorgesehen sind. Diese Wärmespeicherkapazität erlaubt einen Teillastbetrieb des Reaktors beziehungsweise einer aus mehreren Reaktoren bestehenden erfindungsgemäßen Anlage, die über zumindest zwei voneinander unabhängig betreibbare Reaktorkammern und/oder Reaktoren verfügt, die je nach Auslastung entweder gleichzeitig oder zeitlich versetzt zueinander betrieben werden können. Ein wesentlicher Vorteil der erfindungsgemäßen Anlage ist, dass diese je nach Bedarf um weitere Reaktorkammern und/oder Reaktoren mit zugehöriger Katalysatorschicht auf einfache Weise erweitert werden kann. Des Weiteren erlaubt dieser Aufbau eine sehr flexible Betriebsführung, die stark schwankende Lastwechsel aufgrund der Kopplung des Methanisierungsprozesses mit der zur Herstellung des Wasserstoffgases angewandten Elektrolyse mit elektrischer Energie aus erneuerbaren Energiequellen toleriert.

## Patentansprüche

1. Verfahren zur katalytischen Methanisierung von Eduktgasen, nämlich Kohlenstoffdioxid und/oder Kohlenstoffmonoxid mit Wasserstoff in einem Reaktor (100, 200), mit einem ersten Schritt, in dem Wasserstoffgas aus Wasser elektrolytisch hergestellt wird, wobei in einem zweiten Schritt die katalytischen Methanisierung von Kohlendioxid und/oder Kohlenmonoxid mit dem gewonnenen Wasserstoff erfolgt, wobei die für die Elektrolyse benötigte elektrische Energie aus einer erneuerbaren Energiequelle, beispielsweise Windenergie bezogen wird, **dadurch gekennzeichnet, dass** ein zur Methanisierung eingesetzter Katalysator (140) auf einer Trägerstruktur mit einer Wärmespeicherkapazität größer 700 J/(kgK) angeordnet ist, wobei die Trägerstruktur bevorzugterweise als Wabenstruktur ausgebildet ist, die als Speichermasse für die während der Methanisierung entstehende Reaktionswärme eingesetzt wird, wobei die in der Trägerstruktur gespeicherte Reaktionswärme über zumindest eine Wärmetauschereinrichtung (170, 270) abgeführt wird.

2. Verfahren nach Anspruch 1, **dadurch gekennzeichnet, dass** der Reaktor (100) zumindest zwei Reaktorkammern (110a, 110b, 110c) aufweist, die seriell, parallel oder wechselseitig mit Eduktgas beschickt werden.

3. Verfahren nach Anspruch 2, **dadurch gekennzeichnet, dass** die zumindest zwei Reaktorkammern (110a, 110b, 110c) in zumindest zwei Kompartimente (131, 132) unterteilt sind, die seriell, parallel oder wechselseitig mit Eduktgas beschickt werden.

4. Verfahren nach einem der Ansprüche 2 oder 3, **dadurch gekennzeichnet, dass** jede Reaktionskammer (110a, 110b, 110c) mit Wärmetauschereinrichtungen (170) ausgestattet ist, die eine Abfuhr von überschüssiger Wärme und/oder Temperierung der jeweiligen Reaktionskammer (110a, 110b, 110c) erlauben.

5. Anlage zur Durchführung eines Verfahrens zur katalytischen Methanisierung von Eduktgasen, nämlich Kohlenstoffdioxid und/oder Kohlenstoffmonoxid mit Wasserstoff, wobei eine Elektrolyse von Wasser zur Herstellung von Wasserstoffgas mittels elektrischer Energie aus einer erneuerbaren Energiequelle vorgesehen ist, mit zumindest einem Reaktor, in dem der Katalysator (140) angeordnet ist, wobei der zumindest eine Reaktor (110a, 110b, 110c) über zumindest eine Gaszuleitung (150a, 150b, 150c) und zumindest eine Wärmetauschereinrichtung (170) verfügt, **dadurch gekennzeichnet, dass** der zur Methanisierung eingesetzte Katalysator (140) eine Trägerstruktur mit einer Wärmespeicherkapazität größer 700 J/(kgK) aufweist, wobei die Trägerstruktur als Speichermasse für die während der Methanisierung entstehende Reaktionswärme einsetzbar ist, und die in der Trägerstruktur gespeicherte Reaktionswärme über zumindest eine Wärmetauschereinrichtung (170, 270) abführbar ist.

6. Anlage (100, 200) nach Anspruch 5, **dadurch gekennzeichnet, dass** die Trägerstruktur des Katalysators (140) eine Wabenstruktur mit wabenförmigen Grundkörpern aufweist.

7. Anlage (100, 200) nach Anspruch 6, **dadurch gekennzeichnet, dass** die wabenförmigen Grundkörper einen rechteckigen, quadratischen, gleichmäßigen dreieckigen oder gleichmäßigen sechseckigen Querschnitt aufweisen, wobei die Waben bevorzugterweise eine Seitenlänge von 0,05 m bis 0,3 m und eine Wabenhöhe von 0,1 m bis 0,6 m aufweisen.

8. Anlage (100, 200) nach einem der Ansprüche 5 bis 7, **dadurch gekennzeichnet, dass** die Trägerstruktur des Katalysators (140) aus einem Material hergestellt ist, das aus einer Gruppe gewählt ist, die Keramikoxide, wie beispielsweise Siliziumoxid, Titanoxid, Aluminiumoxid, Ceroxid, Zirkoniumoxid, oder Mischungen daraus enthält, wobei die Trägerstruktur besonders bevorzugt aus bei 1300°C bis 1600°C gebrannten Cordierit-, Mullit- oder Aluminiumoxidmassen hergestellt ist.

9. Anlage (100, 200) nach einem der Ansprüche 5 bis 8, **dadurch gekennzeichnet, dass** zumindest teilweise auf der Oberfläche der Trägerstruktur ein katalytisch aktives Material, bevorzugterweise als Wash-Coat, aufgebracht ist, wobei der Katalysator zumindest ein Element der Gruppe-VIII-Elemente, insbesondere aus der Nickelgruppe, der Kobaltgruppe oder der Eisengruppe, enthält.

10. Anlage (100) nach einem der Ansprüche 5 bis 9, **dadurch gekennzeichnet, dass** ein Reaktorsystem mit zumindest zwei Reaktorkammern (110a, 110b, 110c) vorgesehen ist, in denen der Katalysator (140) angeordnet ist.

11. Anlage (100) nach Anspruch 10, **dadurch gekennzeichnet, dass** die Reaktorkammern (110a, 110b, 110c) in zumindest zwei Kompartimente (131, 132) unterteilt sind, wobei jedes Kompartiment (131, 132) unabhängig mit Eduktgas anströmbar ist.

12. Anlage (200) nach einem der Ansprüche 5 bis 9, **dadurch gekennzeichnet, dass** ein Reaktorsystem mit zumindest zwei Festbettreaktoren (210) vorgesehen ist, in denen der Katalysator (140) angeordnet ist, wobei vorteilhafterweise jeder Reaktor (210) über zumindest eine Gaszuleitung (250) und vorzugsweise zumindest eine Wärmetauschereinrichtung (270) verfügt.

13. Anlage (100, 200) nach einem der Ansprüche 5 bis 12, **dadurch gekennzeichnet, dass** die Trägerstruktur des Katalysator (140) innerhalb der jeweiligen Reaktorkammer (110a, 110b, 110c) in Schichten angeordnet ist, wobei die Schichtstruktur bevorzugterweise 4 bis 30 Kanäle pro cm², also eine Zelldichte von 25 cpsi bis 200 cpsi aufweist.

14. Anlage (100, 200) nach Anspruch 13, **dadurch gekennzeichnet, dass** die Schichtstruktur zumindest eine katalytisch aktive Schicht (140) und zumindest eine katalytisch inaktive Schicht (141) aufweist, die bevorzugterweise aus der Trägerstruktur für den Katalysator (140) gebildet ist.

## Claims

1. Method for the catalytic methanization of reactant gases, namely carbon dioxide and/or carbon monoxide, using hydrogen in a reactor (100, 200), having a first step in which hydrogen gas is electrolytically produced from water, wherein in a second step the catalytic methanization of carbon dioxide and/or carbon monoxide with the hydrogen obtained is carried out, wherein the electrical energy required for the electrolysis is obtained from a renewable energy source, for example wind energy, **characterised in that** a catalyst (140) used for methanization is arranged on a carrier structure with a heat storage capacity greater than 700 J/(kgK), wherein the carrier structure is preferably designed as a honeycomb structure which is used as a storage compound for the reaction heat generated during methanization, wherein the reaction heat stored in the carrier structure is removed via at least one heat exchanger device (170, 270).

2. Method according to claim 1, **characterised in that** the reactor (100) comprises at least two reactor chambers (110a, 110b, 110c) which are charged with reactant gas in series, parallel or alternately.

3. Method according to claim 2, **characterised in that** the at least two reactor chambers (110a, 110b, 110c) are subdivided into at least two compartments (131, 132) which are charged with reactant gas in series, in parallel or alternately.

4. Method according to one of claims 2 or 3, **characterised in that** each reaction chamber (110a, 110b, 110c) is equipped with heat exchanger devices (170) which allow excess heat to be removed and/or temperature control of the respective reaction chamber (110a, 110b, 110c).

5. System for carrying out a method for the catalytic methanization of reactant gases, namely carbon dioxide and/or carbon monoxide with hydrogen, wherein an electrolysis of water is provided for the production of hydrogen gas by means of electrical energy from a renewable energy source, having at least one reactor in which the catalyst (140) is arranged, wherein the at least one reactor (110a, 110b, 110c) comprises at least one gas supply line (150a, 150b, 150c) and at least one heat exchanger device (170), **characterised in that** the catalyst (140) used for methanization has a carrier structure with a heat storage capacity greater than 700 J/(kgK), wherein the carrier structure can be used as a storage mass for the reaction heat obtained during methanization, and the reaction heat stored in the carrier structure can be removed via at least one heat exchanger device (170, 270).

6. System (100, 200) according to claim 5, **characterised in that** the carrier structure of the catalyst (140) has a honeycomb structure with honeycomb-shaped base bodies.

7. System (100, 200) according to claim 6, **characterised in that** the honeycomb-shaped base bodies have a rectangular, square, uniform triangular or uniform hexagonal cross-section, wherein the honeycombs preferably have a side length of 0.05 m to 0.3 m and a honeycomb height of 0.1 m to 0.6 m.

8. System (100, 200) according to one of claims 5 to 7, **characterised in that** the carrier structure of the catalyst (140) is made of a material selected from a group containing ceramic oxides such as silicon oxide, titanium oxide, aluminum oxide, cerium oxide, zirconium oxide, or mixtures thereof, wherein the carrier structure is made particularly preferably from cordierite, mullite or aluminum oxide compounds fired at 1300°C to 1600°C.

9. System (100, 200) according to one of claims 5 to 8, **characterised in that** a catalytically active material, preferably as a washcoat, is applied at least partially to the surface of the carrier structure, wherein the catalyst contains at least one element of the group VIII elements, in particular from the nickel group, the cobalt group or the iron group.

10. System (100) according to one of claims 5 to 9, **characterised in that** a reactor system with at least two reactor chambers (110a, 110b, 110c) is provided, in which the catalyst (140) is arranged.

11. System (100) according to claim 10, **characterised in that** the reactor chambers (110a, 110b, 110c) are subdivided into at least two compartments (131, 132), wherein reactant gas can flow into each compartment (131, 132) independently.

12. System (200) according to one of claims 5 to 9, **characterised in that** a reactor system with at least two fixed-bed reactors (210) is provided, in which the catalyst (140) is arranged, wherein advantageously each reactor (210) comprises at least one gas supply line (250) and preferably at least one heat exchanger device (270).

13. System (100, 200) according to one of claims 5 to 12, **characterised in that** the carrier structure of the catalyst (140) is arranged in layers within the respective reactor chamber (110a, 110b, 110c), wherein the layer structure preferably comprises 4 to 30 channels per cm², thus having a cell density of 25 cpsi to 200 cpsi.

14. System (100, 200) according to claim 13, **characterised in that** the layer structure comprises at least one catalytically active layer (140) and at least one catalytically inactive layer (141), which is preferably formed from the carrier structure for the catalyst (140).

## Revendications

1. Procédé de méthanisation catalytique de produits gazeux, à savoir du dioxyde de carbone et/ou du monoxyde de carbone avec de l'hydrogène dans un réacteur (100, 200), comprenant :
- une première étape au cours de laquelle l'hydrogène gazeux est obtenu par électrolyse de l'eau,
- une seconde étape, de méthanisation catalytique du dioxyde de carbone et/ou du monoxyde de carbone avec l'hydrogène ainsi obtenu, l'énergie électrique nécessaire à l'hydrolyse étant fournie par une source d'énergie renouvelable, par exemple, de l'énergie éolienne,
procédé **caractérisé en ce que**
le catalyseur (140) pour la méthanisation est sur une structure de support ayant une capacité thermique supérieure à 700J/(kgK), la structure de support étant, de préférence, réalisée comme structure en nids d'abeilles que l'on utilise comme masse de stockage de la chaleur de réaction dégagée pendant la méthanisation,
- la chaleur de réaction stockée dans la structure de support étant évacuée par au moins une installation d'échangeur de chaleur (170, 270).

2. Procédé selon la revendication 1,
**caractérisé en ce que**
le réacteur (100) comporte au moins deux chambres de réaction (110a, 110b, 110c) alimentées en produits gazeux, en série, en parallèle ou en alternance.

3. Procédé selon la revendication 2,
**caractérisé en ce que**
les deux chambres de réaction (110a, 110b, 110c) sont subdivisées en au moins deux compartiments (131, 132) alimentés en série, en parallèle ou alternativement en produits gazeux.

4. Procédé selon l'une des revendications 2 ou 3,
**caractérisé en ce que**
chaque chambre de réaction (110a, 110b, 110c) est munie d'installations d'échangeur de chaleur (170) qui permettent une évacuation de la chaleur en excédent et/ou la mise en température de la chambre de réaction respective (110a, 110b, 110c).

5. Installation pour la mise en œuvre d'un procédé de méthanisation catalytique de produits gazeux, à savoir du dioxyde de carbone et/ou du monoxyde de carbone avec de l'hydrogène, l'électrolyse de l'eau pour obtenir de l'hydrogène gazeux par l'énergie électrique provenant d'une source d'énergie renouvelable, et au moins un réacteur dans lequel se trouve le catalyseur (140), le réacteur (110a, 110b, 110c) ayant au moins une conduite de gaz (150a, 150b, 150c) et au moins une installation d'échangeur de chaleur (170),
installation **caractérisée en ce que**
le catalyseur (140) utilisé pour la méthanisation comporte une structure de support avec une capacité d'accumulation de chaleur supérieure à 700 J/(kgK), la structure de support étant utilisée comme masse de stockage de la chaleur de réaction dégagée pendant la méthanisation, cette chaleur de réaction stockée dans la structure de support étant évacuée par au moins une installation d'échange de chaleur (170, 270).

6. Installation (100, 200) selon la revendication 5,
**caractérisée en ce que**
la structure de support du catalyseur (140) comprend une structure en nids d'abeilles avec des corps de base en nids d'abeilles.

7. Installation (10, 200) selon la revendication6,
**caractérisée en ce que**
la structure du corps de base, en nids d'abeilles correspond à une section rectangulaire, carrée, à triangles équilatéraux ou à hexagones réguliers, les alvéoles ayant de préférence une arête de 0,05 m jusqu'à 0,3 m et une hauteur d'alvéole de 0,1 m jusqu'à 0,6 m.

8. Installation (100, 200) selon l'une des revendications 5 à 7,
**caractérisée en ce que**
la structure de support du catalyseur (140) est réalisée en une matière choisie dans un groupe comprenant : les oxydes de céramique, par exemple, l'oxyde de silicium, l'oxyde de titane, l'oxyde d'aluminium, le céroxide, le monoxyde de zirconium et leurs mélanges, la structure de support étant réalisée d'une manière particulièrement préférentielle à partir d'une masse précuite entre 1300°C et 1600°C de Cordiérite, de Mulite ou d'oxyde d'aluminium.

9. Installation (100, 200) selon l'une des revendications 5 à 8,
**caractérisée en ce qu'**
une matière à catalytique active, de préférence un revêtement blanc de lavage est appliqué en partie sur la surface de la structure de support, le catalyseur ayant au moins un élément du groupe VIII du tableau des éléments, en particulier, du groupe du nickel, du cobalt ou du fer.

10. Installation (100) selon l'une des revendications 5 à 9,
**caractérisée en ce que**
elle comporte un système de réacteur ayant au moins deux chambres de réacteur (110a, 110b, 110c) avec du catalyseur (140).

11. Installation (100) selon la revendication 10,
**caractérisée en ce que**
les chambres de réacteur (110a, 110b, 110c) sont subdivisées en au moins deux compartiments (131, 132), chaque compartiment (131, 132) recevant séparément le produit gazeux.

12. Installation (200) selon l'une des revendications 5 à 9,
**caractérisée en ce que**
elle comporte un système de réacteur avec au moins deux réacteurs à lit solide (210) dans lesquels il y a le catalyseur (140), et de façon avantageuse, chaque réacteur (210) dispose d'au moins une conduite de gaz (250) et de préférence d'au moins une installation d'échange de chaleur (270).

13. Installation (100, 200) selon l'une des revendications 5 à 12,
**caractérisée en ce que**
la structure de support du catalyseur (140) dans chaque chambre de réacteur (110a, 110b, 110c) est à l'état de couches, la structure de couches ayant de préférence entre 4 et 30 canaux par cm², c'est-à-dire une densité de cellules de 25 cpsi jusqu'à 200 cpsi.

14. Installation (100, 200) selon la revendication 13,
**caractérisée en ce que**
la structure de couches comprend au moins une couche catalytique active (140) et au moins une couche catalytique inactive (141), celle-ci étant, de préférence, formée par la structure de support du catalyseur (140).
